# EUROPEAN PATENT APPLICATION

(11) **EP 1 947 373 A1**
(43) Date of publication of application: **23.07.2008**
(21) Application number: 07405017.0
(22) Date of filing: 19.01.2007
(51) Int. Cl.: F16J 15/44, F01D 11/00

(54) **Sealing arrangement**

(71) Applicant: ABB Turbo Systems AG, 5400 Baden (CH)
(72) Inventor: Werro, Jean-Yves, 5417 Untersiggenthal (CH); Wellenkamp, Ulrich, 5210 Windisch (CH)
(74) Representative: ABB Patent Attorneys

(57) **Abstract**

The sealing assembly comprises a bore (25) in a housing (20), a plurality of seal rings (31, 32, 33) and a shaft (10). The bore (25) comprises a plurality of seats (21, 22, 23) disposed at different seat radius for the seal rings. The bore comprises for each pair of adjacent seats axially inward of an inner end of the outward seat and proximate to the inward seat a chamfer (221, 231) extending radially inwardly over an inward axial distance.

The chamfer between each pair of seats allows for the radial contraction of the seal rings (31, 32, 33) upon assembly.

## Description

### Technical Field

Subject matter disclosed herein relates generally to the technical field of turbomachinery for internal combustion engines and, in particular, seals for rotating turbomachinery shafts.

### Background

Most turbines include a shaft that extends from a hub of a turbine wheel to a shaft bearing. For example, turbines of exhaust gas turbochargers for internal combustion engines typically include a turbine wheel housing that directs exhaust of an engine to a turbine wheel and another housing that houses a bearing for a shaft coupled to the turbine wheel. In such an arrangement, the bearing exists in a lubricant environment that lubricates the bearing to reduce frictional forces, dampen vibration, etc., to thereby allow for high speed operation of the turbine, and the turbine wheel exists in an exhaust environment typically characterized by high temperatures, high pressures and, depending on nature of the exhaust, corrosive reaction chemistry. To separate these two environments, a variety of seal mechanisms have been proposed and used.

In general, such seal mechanisms aim to reduce flow of exhaust to the lubricant environment and/or flow of lubricant to the exhaust environment, both of which can be detrimental to performance (e.g., efficiency, emissions, longevity, etc.). Flow of exhaust to the lubricant environment is usually referred to as "blowby" and flow of lubricant to the exhaust environment is usually referred to as "leakage". Blowby typically occurs during high speed operation or load where a significant positive pressure differential exists between the exhaust environment and the lubricant environment.

Leakage typically occurs during low turbine-power modes of operation, such as at engine idle, where the pressure differential is negative and/or minimal and insufficient to overcome capillary or other lubricant transport forces.

As the turbomachinery industry trends toward increased turbine inlet pressures, more stringent emission regulations, closed-crankcase ventilation systems, and increased customer sensitivity to the passage of exhaust gas through the turbine seal, a need for seal mechanisms that reduce blowby and/or leakage will increase, and the design of such mechanisms will become more challenging. Various exemplary sealing assemblies disclosed herein aim to reduce blowby and/or leakage. Further, various exemplary sealing assemblies may allow for increased performance (e.g., efficiency, emissions, longevity, etc.), assembly and/or disassembly of turbomachinery.

US 2006/0002803 A1, which is hereby incorporated by reference herein, discloses an exemplary bore for a shaft of a turbomachine including a plurality of seal rings. An exemplary sealing assembly includes two seal rings, a radial inner surface of the bore and an outer surface of the shaft that act together to create resistance to flow. The seal mechanism creates resistance via a tortuous path and reduced flow area, sometimes referred to as a labyrinth seal. The surface of the turbine bore segment includes an outer seat. The inner surface of the turbine bore segment also includes an inner seat. The outer seat receives the outer ring while the inner seat receives the inner ring. The exemplary shaft includes an outer slot that substantially coincides with the outer ring and an inner slot that substantially coincides with the inner ring. The axial width of the recess of the outer seat, is selected to be smaller than the axial width of the inner ring. This allows the inner ring to bridge and axially traverse the outer seat upon installation of the inner ring. Further embodiments of the exemplary bore for a shaft of a turbomachine as well as an exemplary method for positioning a plurality of seal rings on a shaft is disclosed in US 2006/0236694 A1, which is hereby incorporated by reference herein, and in US 2006/0236695 A1, which is hereby incorporated by reference herein.

### Brief Description of the Invention

It is an object of the invention, to improve a sealing assembly for a shaft of a turbomachine in a bore of a housing.

The inventive sealing assembly comprises a bore in a housing, a plurality of seal rings and a shaft operably coupled to a turbine wheel wherein the bore, the seal rings and the shaft form a labyrinth seal. The bore comprises a plurality of seats disposed between an inner and an outer end of the bore at different seat radius for the seal rings. Of each pair of adjacent seats, the seat radius of the outward seat exceeds the seat radius of the inward seat. The bore comprises for each pair of adjacent seats axially inward of an inner end of the outward seat and proximate to the inward seat a chamfer extending radially inwardly over an inward axial distance. The chamfer between each pair of seats allows for the radial contraction of the seal rings upon assembly.

In order to reduce leakage, an inwardly facing annular groove is optionally disposed between the innermost seal ring and the other seal rings. The annular groove leads into a drain channel located at the bottom of the annular groove. The drain channel is connected to the lubricant environment. The cross section of the drain channel is preferably bigger than the minimal cross section formed by the gap between the innermost seal ring and the shaft.

For the assembly of the seal ring in the shaft, the seal rings are optionally divided by a split. As this split affects the flow area through and around the seal rings, it is desirable to maintain this split at a minimum typically dictated by necessity to allow for installation and/ or thermal expansion during operation. To compensate for any detrimental effect such an example may have on seal performance, a step gap geometry may be employed in the seal rings to increase flow resistance. In order to limit the radial extension of the seal ring before the assembly, the split can have a stopper configuration, or stop element. As the stop element limits the radial extension of the seal ring, the size of each chamfer can be minimised.

### Brief Description of the Drawings

A more complete understanding of the invention may be had by reference to the following detailed description when taken in conjunction with the accompanying drawings wherein:
- Fig. 1: is a cross-sectional view of an exemplary housing of a turbocharger,
- Fig. 2: is a cross-section view of an exemplary sealing assembly for a bore and a shaft,
- Fig. 3: is a close-up of the exemplary sealing assembly of Fig. 2,
- Fig. 4: is a close-up of the bore of the exemplary sealing assembly of Fig. 2,
- Fig. 5: is a side view of a section of the step gap seal ring with the stop element before the mounting, and
- Fig. 6: is a side view of a section of the contracted step gap seal ring of Fig. 5 after the mounting.

### Detailed Description

Turbochargers are typically utilized to increase the output of an internal combustion engine. The internal combustion engine includes an engine block housing one or more combustion chambers that operatively drive a shaft. An intake port provides a flow path for air to the engine block while an exhaust port provides a flow path for exhaust from the engine block. The turbocharger acts to extract energy from the exhaust and to provide energy to intake air, which may be combined with fuel to form combustion gas. The turbocharger typically includes an air inlet, a shaft, a compressor, a turbine, a bearing housing and an exhaust outlet.

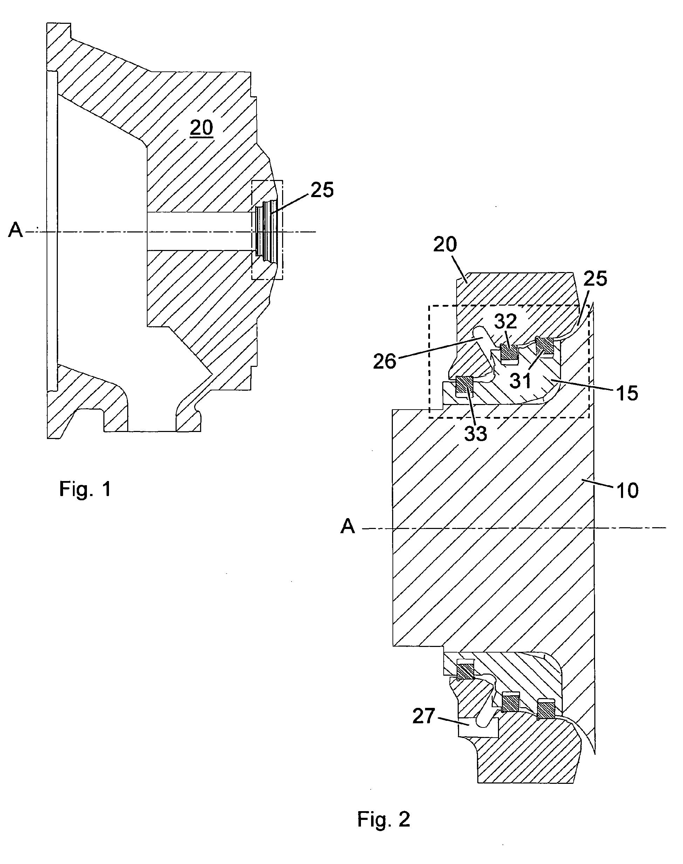

Fig. 1 shows a cross-section of an exemplary housing 20 for housing a bearing to support a turbine wheel shaft. The exemplary housing 20 includes a through bore 25. In general, such a through bore has a longitudinal axis A that is coaxial with the axis of rotation of a turbine wheel and a compressor wheel. A dashed box indicates an exemplary sealing assembly of the turbine bore segment of the bore 25 that is shown in more detail in Fig. 2, 3 and 4 along with additional components.

Fig. 2 shows a cross-section of the exemplary sealing assembly of the turbine bore segment along with seal rings 31, 32 and 33 and a shaft 10. Shaft 10 comprises a section that includes a plurality of radially outwardly opened annular slots, which are capable of receiving said seal rings. In general, the radially outwardly opened slots are cut in the turbine shaft sufficiently inboard of the joint between the shaft and the turbine wheel to avoid a heat affected zone. Optionally, the section of the shaft comprising the radially outwardly opened slots may be formed by a separate, ring shaped bush 15.

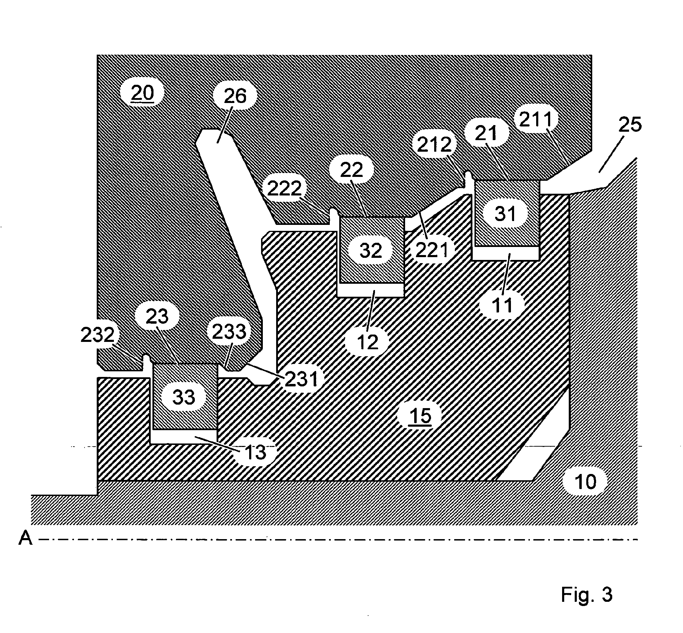

The close-up of the exemplary sealing assembly in Fig. 3 shows a plurality of seats included in the inner surface of bore 25. There is a corresponding seat to each radially outwardly opened slot. An outer radially outwardly opened slot 11 receives the outer seal ring 31 which is seated in an outer seat 21 of the bore. An intermediate radially outwardly opened slot 12 receives the intermediate seal ring 32 which is seated in an intermediate seat 22 of the bore. Finally, an inner radially outwardly opened slot 13 receives the inner seal ring 33 which is seated in an inner seat 23 of the bore. To allow for installation, the axial width of a radially outwardly opened slot slightly exceeds the axial width of a respective seal ring.

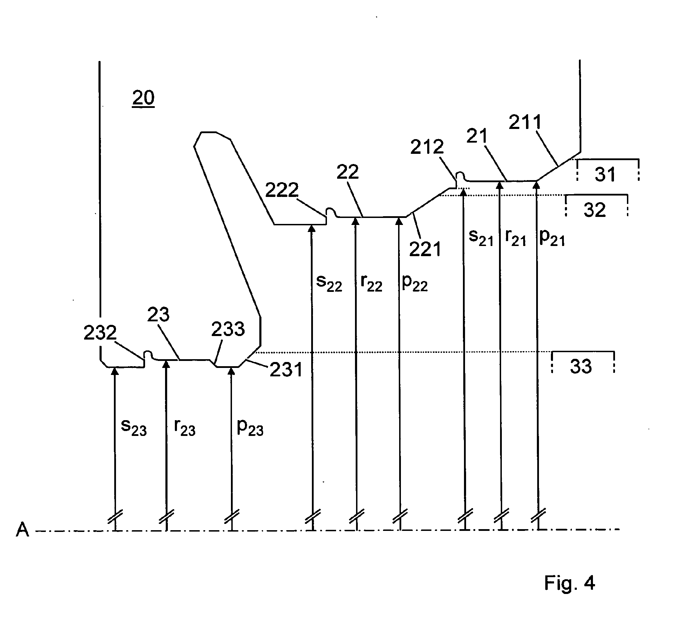

Each of the seats included in the inner surface of bore 25 has a radially inwardly extending step on its inward side. As shown in detail in Fig. 4, an outer step 212 of outer seat 21 extends radially inwardly to an outer step radius S₂₁, which is smaller than outer seat radius r₂₁ of outer seat 21. An intermediate step 222 of intermediate seat 22 extends radially inwardly to an intermediate step radius S₂₂, which is smaller than intermediate seat radius r₂₂ of intermediate seat 22. An inner step 232 of inner seat 23 finally extends radially inwardly to an inner step radius S₂₃, which is smaller than inner seat radius r₂₃ of inner seat 23. These steps of the seats generally limit inward movement of the rings. The seats optionally include a small, radially inwardly open groove adjacent the step.

During use or operation, a seal ring will typically wear-in under gas loading until an edge of the seal ring contacts the radially inward extending step in its seat wherein such contact can serve to limit further wear of a ring.

The seal rings 31, 32 and 33, the radially inward surface of the turbine bore segment 25, and a radially outward surface of the shaft 10 act together to create resistance to flow of exhaust to the lubricant environment (blowby). The seal mechanism creates resistance via a tortuous path and reduced flow area, sometimes referred to as a labyrinth seal. The outer seal ring 31, the intermediate seal ring 32 and the inner seal ring 33 act to create resistances in series.

The exemplary sealing assembly includes features that facilitate assembly and/ or disassembly of the shaft 10 from the bore 25. A particular feature that facilitates assembly and/or disassembly is the various chamfers in the wall of the bore. Outside of the outer end of the outer seat 21, there is a chamfer 211 extending radially outward over an outward axial distance from an outer chamfer plateau radius P₂₁. Between each pair of seats in the bore, there is a chamfer extending radially inwardly over an inward axial distance. Between the outer seat 31 and the intermediate seat 32, there is a chamfer 221 extending radially inward over an inward axial distance to an intermediate chamfer plateau radius p₂₂. Between the intermediate seat 32 and the inner seat 33, there is a chamfer 231 extending radially inward over an inward axial distance to an inner chamfer plateau radius p₂₃.

The chamfers extend radially inward over a radial distance. This distance is at least slightly exceeding the difference between the outer radius of the seal ring before the mounting and the radius of the corresponding seat. In other words, the widest radius of each chamfer is exceeding the outer radius of the corresponding seal ring before the mounting, as indicated in Fig. 4 by the non-compressed seal rings 31, 32 and 33 at the right side of the drawing. In order to further facilitate mounting of the seal rings, the widest radius of each chamfer can be enlarged thus further extending the distance the chamfers extend radially inward. Also, the corresponding radially outwardly opened slot in the shaft has to be radially deep enough to allow the seal ring to contract radially during the mounting.

The inner end of the inner seat 23 has a step 232 limiting movement of the corresponding seal ring in axial inward direction. In addition, at the outer end of the inner seat there is optionally a chamfer 233 extending radially inwardly over an outward axial distance to the inner chamfer plateau radius p₂₃. The distance from the step 232 of the inner seat 23 to the chamfer 233 is optionally selected to allow for adequate excursion of the inner ring 33 in the inner seat 23 during use or operation. Should the inner ring 33 reach the chamfer 233 during use or operation, the chamfer will offer some resistance to further axial outward movement of the inner ring 33 toward the turbine end of the bore, which may vary depending on chamfer rise angle, chamfer rise distance, chamfer cross-section, etc.; however, such resistance may typically be overcome during assembly and/or disassembly.

In order to further improve the sealing performance regarding the leakage of lubricant, an inwardly facing annular groove 26 is optionally disposed between the inner seat and the other seats. The annular groove is connected to the lubricant environment by a drain channel 27 located at the bottom of the annular groove. Lubricant passing the inner seal is being collected in the annular groove and lead back to the lubricant environment through the drain channel.

The cross section of the channel is preferably bigger than the minimal cross section formed by the gap between the inner seal ring and the shaft to allow for sufficient lubricant drainage.

While the exemplary chamfers shown have substantially linear cross-section, other examples may include chamfers with non-linear cross-section, optionally in combination with linear cross-section. For example, a chamfer may include a curved cross-section.

The chamfer may serve to compress the seal rings as the shaft with the seal rings received in the radially opened slots is inserted into the bore.

Although during use or operation, the seal rings will typically wear-in under gas loading, some abrasion of the walls forming the radially outwardly opened slots is likely to happen as well. In various exemplary sealing assemblies the surface of the radially outwardly opened slots 11, 12 and 13 are therefore optionally hardened to avoid abrasion of the walls forming the radially outwardly opened slots. In various exemplary sealing assemblies a bush 15 is optionally fit on the shaft 10, replacing the section of the shaft that comprises the radially outwardly opened slots 31, 32, 33. The bush avoids abrasion of the shaft 10 by the seal rings 31, 32 and 33. The bush 15 is optionally made of a material that is harder than the material of the shaft in order to avoid abrasion of the walls forming the radially outwardly opened slots.

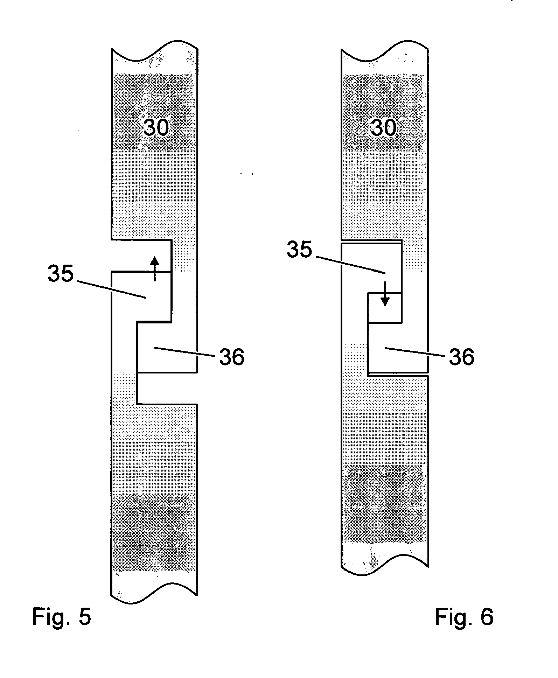

To facilitate assembly/ disassembly of the seal ring in the shaft, the seal rings are optionally divided by a split, as shown in Fig. 5 and Fig. 6. In order to minimise the size of the chamfer, the seal rings 30 can have stop elements 35 and 36 on both sides of the split. The stop elements engage upon radial widening of the seal ring thereby limiting the radial extension of the seal ring before the assembly, as shown in Fig. 5. When a seal ring is inserted in axial direction into the bore it gets radially compressed when led along the radially inward extending chamfer, as shown in Fig. 6. As the stop element limits the radial extension of the seal ring, the size of each chamfer can be minimised. Also several seal rings with different outer diameters may be inserted in one mounting step into several seats with different inner diameters due to the inventive chamfer located outward of each seat.

The sealing arrangement is drawn for the turbine side but the design can be applied on the compressor side of the turbocharger.

### List of Reference Symbols

- 10: Shaft, e.g. turbine wheel shaft
- 11, 12, 13: radially outwardly opened ring slot
- 15: Bush
- 20: Housing
- 21,22,23: Seat
- 211,221,231,233: Chamfer
- 212,222,232: Step
- 25: Bore
- 26: Radially inwardly facing annular groove
- 27: Drain channel
- 30,31,32,33: Seal ring
- 35, 36: Stop element
- A: Axis, e.g. axis of rotation of turbine wheel
- p₂₁, p₂₂, p₂₃: Chamfer plateau radius
- r₂₁, r₂₂, r₂₃: Seat radius
- s₂₁, s₂₂, s₂₃: Step radius

## Claims

1. A sealing assembly for a shaft of a turbomachine in a bore (25) of a housing (20), the bore comprising:
a longitudinal axis (A) extending generally from an inner end to an outer end of the bore;
an outer seat (21) disposed proximate to the outer end of the bore at an outer seat radius (r₂₁) for an outer seal ring (31), and an inner seat (23) disposed axially between the outer seat (21) and the inner end of the bore at an inner seat radius (r₂₃) for an inner seal ring (33), **characterized in, that** the bore comprises axially inward of an inner end of the outer seat and proximate to the inner seat a chamfer (231) extending radially inwardly over an inward axial distance to an inner chamfer plateau radius (p₂₃).

2. The assembly of claim 1, the bore further comprising axially between the outer seat (21) and the inner seat (23) an intermediate seat (22) at an intermediate seat radius (r₂₂) for an intermediate seal ring (32) and axially inward of the inner end of the outer seat (21) and proximate to the intermediate seat (22) a chamfer (221) extending radially inwardly over an inward axial distance to an intermediate chamfer plateau radius (P₂₂).

3. The assembly of claim 1, wherein the inner seat radius (r₂₃) exceeds the inner chamfer plateau radius (p₂₃) and wherein the inner seat (23) comprises a chamfer (233) at the outer end extending radially inwardly over an outward axial distance to the inner chamfer plateau radius (p₂₃).

4. The assembly of claim 1, further comprising a radial inwardly facing annular groove (26) disposed axially outward of the inner seat.

5. The assembly of claim 4, wherein said annular groove (26) is connected to a drain channel (27).

6. A sealing assembly for a shaft of a turbomachine in a bore (25) of a housing (20), the bore comprising:
a longitudinal axis (A) extending generally from an inner end to an outer end of the bore;
a plurality of seats (21, 22, 23) disposed between said inner and said outer end of the bore at different seat radius (r₂₁, r₂₂, r₂₃) for a plurality of seal rings (31, 32, 33), wherein of each pair of adjacent seats (21/ 22; 22/ 23) the seat radius (r₂₁; r₂₂) of the outward seat exceeds the seat radius (r₂₂; r₂₃) of the inward seat, **characterized in, that** the bore comprises for each pair of adjacent seats (21/ 22; 22/ 23) axially inward of an inner end of the outward seat (21; 22) and proximate to the inward seat (22; 23) a chamfer (221; 231) extending radially inwardly over an inward axial distance.

7. The assembly of claim 6, wherein the innermost seat (23) comprises a chamfer (233) at the outer end extending radially inwardly over an outward axial distance to an inner chamfer plateau radius (P₂₃).

8. The assembly of claim 6, wherein the bore comprises axially outward of an outer end of the outer seat (21) a chamfer (211) extending radially outward over an outward axial distance from an outer chamfer plateau radius (p₂₁).

9. A system for a turbomachine, the system comprising:
a sealing assembly according to one of claims 1 to 8 with a bore (25) in a housing (20);
a rotatable shaft (10), insertably positionable in the bore (25) and comprising at least two radially outwardly opened slots (11, 12, 13); and
seal rings (31, 32, 33), positionable on the shaft (11), capable of being received by the slots (11, 12, 13) and capable of being seated in the seats (21, 22, 23) of the bore (25).

10. The system of claim 9, wherein at least one of the seal rings (31, 32, 33) comprises a step gap with a stop element (35, 36).

11. The system of claim 9, wherein the shaft comprises a bush (15), and wherein said radially outwardly opened slots (11, 12, 13) are disposed in said bush (15).

12. A turbocharger comprising:
a compressor, comprising a compressor housing and a compressor wheel mounted in the compressor housing;
a turbine, comprising a turbine housing and a turbine wheel mounted in the turbine housing;
a shaft (10) connecting the compressor wheel to the turbine wheel;
a bearing housing (20) disposed between the compressor and the turbine housings, the bearing housing defining a bore (25) that receives the shaft (10) therethrough according to the sealing assembly of one of claims 1 to 8.
